(19) Europäisches Patentamt

European Patent Office    (11) Veröffentlichungsnummer: **0 031 510**

Office européen des brevets    **B1**

(12) **EUROPÄISCHE PATENTSCHRIFT**

(45) Veröffentlichungstag der Patentschrift: **03.04.85**

(21) Anmeldenummer: **80107726.4**

(22) Anmeldetag: **08.12.80**

(51) Int. Cl.⁴: **G 01 S 7/52,** G 01 S 7/62, G 10 K 11/34

(54) Gerät zur Ultraschallabtastung.

(30) Priorität: **12.12.79 DE 2950005**

(43) Veröffentlichungstag der Anmeldung:
**08.07.81 Patentblatt 81/27**

(45) Bekanntmachung des Hinweises auf die
Patenterteilung:
**03.04.85 Patentblatt 85/14**

(84) Benannte Vertragsstaaten:
**AT CH DE FR GB LI NL**

(56) Entgegenhaltungen:
**DE-A-2 543 678**
**DE-A-2 643 918**
**DE-A-2 713 087**
**DE-A-3 003 967**
**US-A-3 367 173**
**US-A-3 778 757**
**US-A-3 974 682**
**US-A-4 012 952**
**US-A-4 131 023**
**US-A-4 173 007**

(73) Patentinhaber: **Siemens Aktiengesellschaft**
**Berlin und München Wittelsbacherplatz 2**
**D-8000 München 2 (DE)**

(72) Erfinder: **Hassler, Dieter, Dipl.-Ing.**
**Flurweg 3**
**D-8521 Uttenreuth (DE)**

Courier Press, Leamington Spa, England.

## Beschreibung

Die Erfindung bezieht sich auf ein Gerät zur Ultraschall-Abtastung mit einem Ultraschall-Abtastkopf, mit einer Aufzeichnungsvorrichtung für ein Echo-Sichtbild und mit einer Einrichtung zur stufenweisen dynamischen elektrischen Fokussierung des von Abtastkopf im Sendefall abgestrahlten Ultraschallfeldes in Tiefenrichtung, wobei die volle Abtasttiefe in eine vorgegebene Zahl von Tiefenbereichen unterteilt ist, wobei jedem Tiefenbereich ein eigener Sende-/Empfangs-Zyklus zugeordnet ist und wobei die betreffenden Tiefenbereiche jeweils getrennt fokussiert werden.

Ein Gerät zur Ultraschall-Abtastung, das mit dynamischer Fokussierung im Empfangsfall arbeitet, ist z.B in der DE—AS 26 43 918 beschrieben. Dort ist als Stand der Technik bereits ein Gerät der eingangs genannten Art aufgeführt, also ein Gerät, das mit dynamischer Fokussierung zumindest im Sendefall arbeitet. Die dynamische Fokussierung im Sendefall erhöht die Richtwirkung der Antenne, wodurch die Querauflösung des Bildsystems verbessert wird. Allerdings wird dieser Vorteil durch den Nachteil überdeckt, daß ein Mitlauf der Sendefokussierung Verluste an Zeit und Abtastfrequenz mit sich bringt; der Zeitaufwand für den Bildaufbau erhöht sich unnötigerweise.

Aufgabe der Erfindung ist es, ein Ultraschallgerät der eingangs genannten Art anzugeben, das bei Vermeidung allzu großen Zeitverlustes dynamische Fokussierung auch im Sendefall erlaubt.

Die Aufgabe wird erfindungsgemäß dadurch gelöst, daß für jeden auszulotenden Tiefenbereich ein Sendeimpuls zu einem solchen Zeitpunkt abgegeben wird, der unmittelbar oder höchstens um eine vorgebbare Abwartezeit, die klein ist gegen die doppelte Durchlaufzeit der vollen Abtasttiefe, verzögert auf jenes Zeitintervall folgt, in dem aus dem zeitlich davor abgetasteten Tiefenbereich vollständige Echoinformation empfangen ist.

Die Erfindung geht von der Überlegung aus, daß zur ausreichenden Unterdrückung des Bildflimmerns zwar die Bildfolgefrequenz am Bildgerät möglichst groß (z.B ≥50 Hz) sein soll; zur Auflösung körperinterner Bewegungsvorgänge reicht aber im allgemeinen eine niedrigere Ultraschall-Abtastfrequenz (z.B 25 bis 30 Hz) aus. Diese Abtastfrequenz läßt sich mit der Erfindung bequem erreichen, so daß also dynamische Fokussierung auch im Sendefall ohne großen Zeitverlust gewährleistet ist. Die relativ niedrige Ultraschall-Abtastfrequenz kann dann jedoch bequem in üblicher technischer Realisierung mittels Speicher od.dgl. (z.B Wechselpufferspeicherprinzip) in die höhere Bildfrequenz umgesetzt werden.

In vorteilhafter Ausgestaltung der Erfindung kann der Sende-/Empfangs-Zyklus sukzessive für ein und dieselbe Abtastzeile oder auch z.B. im Zeilensprungverfahren für unterschiedlich Zeilen gesteuert sein. Auch kann der Sende-/Empfangs-Zyklus gleichzeitig für mehrere, z.B. zwei, Abtastzeilen, die in ausreichendem räumlichem Abstand voneinander liegen, sukzessive steuerbar sein.

Die Sendefokussierung kann vorteilhafterweise mit einer Empfangsfokussierung gekoppelt sein. In sämtlicher Fällen kann die Sendefokussierung wahlweise über Sendeverzögerungen und/or durch Änderung der Größe der Sendefläche erfolgen. Bei Anwendung einer Fokussierung durch Änderung der Sendefläche soll letztere mit zunehmender Tiefe entsprechend vergrößerbar sein.

Weitere Vorteile und Einzelheiten der Erfindung ergeben sich aus der nachfolgenden Beschreibung eines Ausführungsbeispiels anhand der Zeichnung in Verbindung mit den abhängigen Ansprüchen.

Es zeigen:

Fig. 1 das Diagramm einer Sendefokussierung,

Fig. 2 das Prinzipschaltbild eines bekannten Gerätes mit Sende- und Empfangsfokussierung,

Fig. 3 ein auf das Prinzipschaltbild der Figur 2 anwendbares Prinzipschaltbild für die Sendfokussierung, und

Fig. 4 ein Ausführungsbeispiel für Sende- und Empfangsschalter.

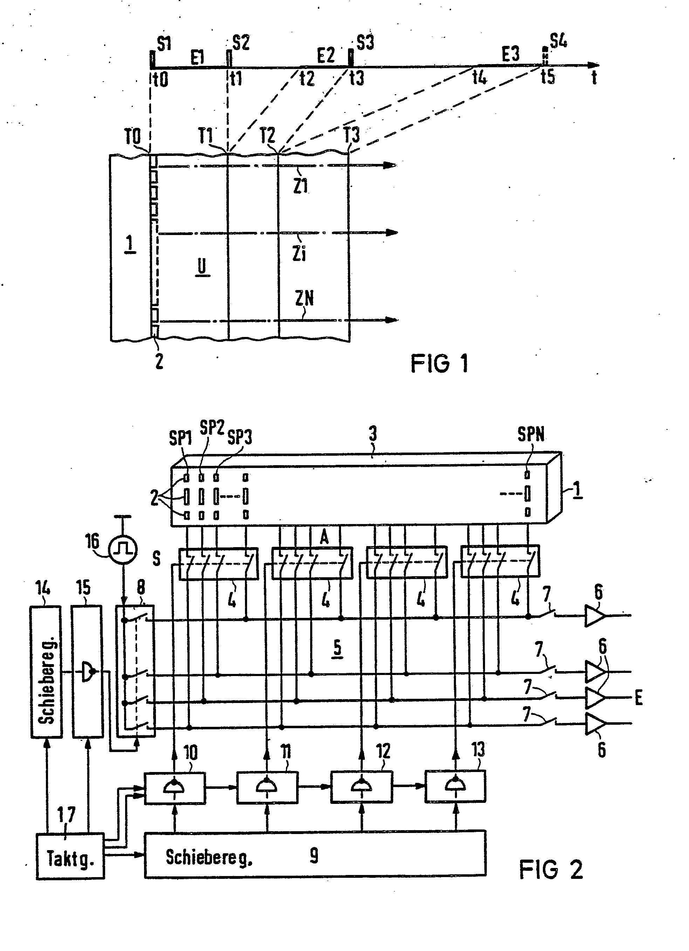

Figur 1 zeigt in schematischer Darstellung die Ultraschall-Abtastebene U eines Ultraschall-Arrays 1 mit einer Wandlerreihe 2 zur Gewinnung eines Objektschnittbildes, z.B. aus dem Innern des menschlichen Körpers. Die Abtastung erfolgt in Zeilen Z1 bis ZN (Zeilen Zi mit i=1 bis N) durch zeitlich aufeinanderfolgende Erregung von einzelnen Wandlerelementen oder Gruppen von Wandlerelementen.

Die Abtastebene U ist in drei Tiefenbereiche T0 bis T1, T1 bis T2 und T2 bis T3 unterteilt. Die drei Tiefenbereiche sind Bereiche unterschiedlich vorgewählter Sendefokussierung (und vorzugsweise gleichzeitig auch unterschiedlich vorgewählter Empfangsfokussierung). In Anlehnung an dieses Konzept kann z.B. für ein 2-MHz-Ultraschall-System eine Unterteilung in die Bereiche T0 bis T1=0 bis 7 cm, T1 bis T2=7 bis 12 cm und T2 bis T3=12 bis 18 cm gewählt werden. Bezogen auf z.B. biologisches Gewebe ergeben sich dann für Hin- und Rücklauf von Ultraschallsignalen in den einzelnen Tiefenbereichen entlang einer Zeile Laufzeiten von 94 μs, 160 μs bzw. 140 μs, in der Summe also 494 μs oder etwa 0,5 ms Gesamtlaufzeit.

Bei Auflösung in z.B. N=80 Zeilen Z1, . . . Zi, . . . ZN werden bei herkömmlichen Ultraschall-Systemen ohne Sendefokussierung (Tiefe 18 cm≙240 μs für Hin- und Rücklauf) für einen Bilddurchlauf insgesamt 19,2 ms benötigt, so daß die Abtastfrequenz bei etwa 52 Hz liegt. Würde hingegen fokussiert werden, so müßte im herkömmlichen System bereits bei Fokussierung in zwei Tiefenbereichen die Gesamtzeit des Bildaufbaues auf 38,4 ms verdoppelt werden. Die Abtastfrequenz würde dann bei etwa 26 Hz liegen. Bei Fokussierung in drei Bereichen würde die Abtastfrequenz sogar auf etwa 17 Hz abgesenkt werden. Die Erfindung vermeidet diesen Nachteil. Gemäß Figur 1 erfolgt nämlich eine Steuerung der Sende-/Empfangsfolgen in solcher Weise, daß beispielsweise der auf den ersten Sendeimpuls S1 folgende zweite Sendeimpuls S2 zu einem Zeitpunkt t1 abgestrahlt wird, der unmittelbar auf das Zeitintervall des Empfangs von Echosignalen E1 des ersten Sendeimpulses S1 folgt. Entsprechend wird der dritte Sendeimpuls S3 am Ende der Empfanszeit der Echosignale E2 des vorhergehenden zweiten Sendeimpulses S2 gesetzt, und schließlich wird mit einem Sendeimpuls S4 am Ende des dritten Empfangsintervalls E3 der Zyklus erneut begonnen. Die Folge dieser Steuerung ist, daß in der Zeitdauer des Gesamtdurchlaufes durch eine einzelne Zeile $Z_i$ (i=1 ... N) insgesamt drei Sende-/Empfangs-Zyklen mit sukzessive aufeinanderfolgenden Sendeseiten $t_0$, $t_1$, $t_3$, $t_5$ etc. am Ende eines jeden vorausgegangenen Empfangsintervalls $t_0$ bis $t_1$, $t_2$ bis $t_3$, $t_4$ bis $t_5$, etc. durchgeführt werden. Die Steuerung ermöglicht somit während der Zeitdauer eines einzelnen Zeilendurchlaufes, nämlich während insgesamt nur einer halben Millisekunde, eine Sendefokussierung in drei hintereinanderliegenden Tiefenbereichen. Trotz der Sendefokussierung wird demnach zum Aufbau einer einzelnen Zeile $Z_i$ nur eine Gesamtzeit von c. 0,5 ms benötigt. Dies bedeutet bei den gewählten 80 Abtastzeilen eine Gesamtzeit für den Bildaufbau von etwa 40 ms, was schließlich zu einer Abtastfrequenz von 25 Hz führt. Wie eingangs erwähnt, reicht eine solche Abtastfrequenz zur Auflösung körperinterner Bewegungsvorgänge häufig aus (mit Ausnahme vielleicht der Darstellung des schlagenden Herzens, bei der eine höhere Frequenz benötigt wird, wozu dann z.B. nur in zwei (anstelle drei) Tiefen fokussiert wird).

Bei Durchführung einer Sendefokussierung gemäß dem Schema der Fig. 1 soll in bevorzugter Ausgestaltung mit zunehmender Tiefe T (jedem Tiefenbereich ist eine Festfokussierung zugeordnet) die Intensität der Ultraschall-Sendesignale S1, S2 etc. zu höheren Werten steuerbar sein. Jedem Tiefenbereich T sollte dabei ein entsprechend gestaffelter Intensitätswert zugeordnet sein. Dadurch wird eine Anzeige sich überlappender Echos, die von verschiedenen Sendeimpulsen in verschiedenen Tiefen ausgelöst werden, überdeckt und damit vermieden.

Zum Ausgleich von Schwankungen des Störabstandes durch z.B. geringere Absorptionsdämpfungen im vorgelagerten Übertragungsweg, insbesondere beim Durchlauf durch stark flüssigkeitsgefüllte interne Organe, soll zwischen dem Ende einer Empfangsperiode und der Abstrahlung des nächstfolgenden Sendeimpulses ein Ausgleichszeitintervall eingelegt werden oder vorhanden sein. Aus diesem Grude soll ein Mechanismus (z.B. ein Programmgeber) vorgesehen sein, der in Anpassung an den entsprechenden Anwendungsfall die Aussendung des nächsten Sendeimpulses um ein entsprechendes kleines Zeitintervall verzögert.

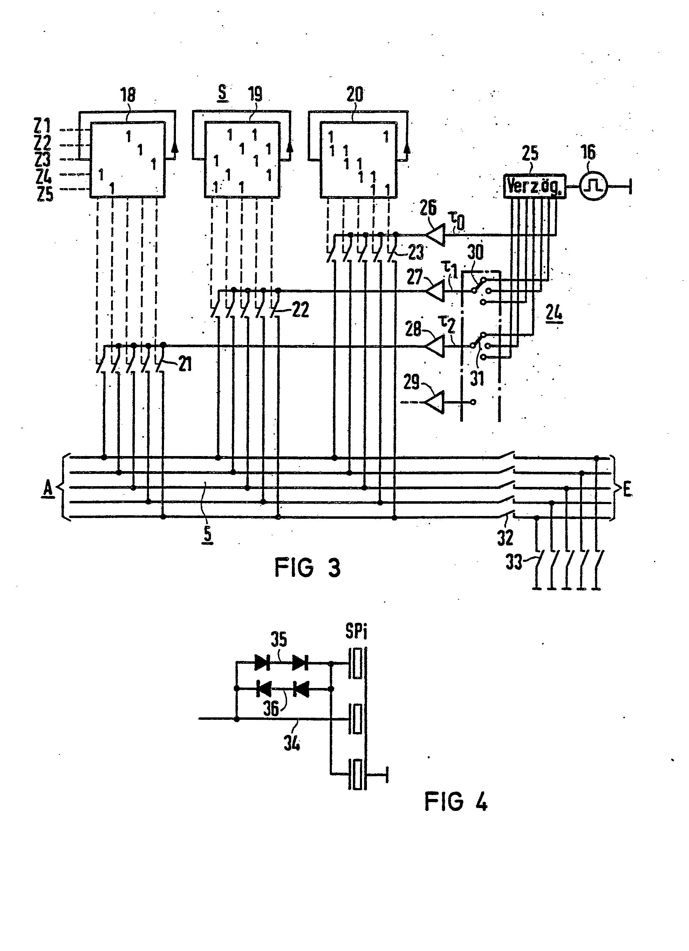

Ein Prinzipschaltbild für Empfangsfokussierung, wie es auch Fig. 2 zeigt, ist aus der DE—AS 26 43 918 bekannt. Dieses Prinzipschaltbild ist in der Modifikation entsprechend Figur 3 auch auf Sendefokussierung anwendbar.

Das Prinzipschaltbild der Fig. 2 zeigt ein Ultraschall-Array 1 mit beispielsweise insgesamt 3×80 Schwingerelementplättchen 2. Diese sind unter Übereinander anordnung von jeweils drei Wandlerelementen in insgesamt 80 Spalten SP1, SP2 bis SPN am Trägerkörper 3 des Arrays 1 nebeneinander angeordnet. Dem Array 1 sind eingangsseitig Flächenmusterschalter 4 zugeordnet, die für die Fokussierung im Empfangsfall verschiedene Plättchen in verschiedenen Spalten zu unterschiedlichen Empfangsflächen anwählen. Auf die Flächenmusterschalter 4 folgen auf der Empfangsseite E über Empfangsschalter 7 und Pufferverstärker 6 die im vorliegenden Fall nicht dargestellten weiterverarbeitenden Bauteile bis hin zur Bildröhre für den Aufbau des Echo-Sichtbildes.

Die Schaltung auf der Sendeseite S umfaßt nach Figur 2 entsprechend Sendeschalter 8, die in Verbindung mit den Flächenmusterschaltern 4 unterschiedliche Sendeflächen festlegen können. Die Festlegung der Sendeflächen sowie die Weitertaktung zwecks zeilenweiser Ultraschallabtastung vor Aussendung eines Sendesignals von der Sendeseite S erfolgt in Abhängigkeit von den Ausgangssignalen eines ersten Schieberegisters 9 und über logische Verknüpfunguglieder 10, 11, 12 und 13. Die Steuerung der Sendeschalter 8 erfolgt über ein zweites Schieberegister 14 mit einer Ausgangslogik 15. Die zur Abstrahlung der Ultraschall-Sendeimpulse benötigten Hochfrequenzimpulse werden von einem Hochfrequenz-Sende-Impulsgenerator 16 geliefert. Zur Steuerung des Gesamtablaufes der Sende-/Empfangs-Zyklen dient ein zentraler Taktgeber 17.

Im bekannten Falle reiner Empfangsfokussierung wären das zweite Schieberegister 14, die Ausgangslogik 15 und die Sendeschalter 8 so gesteuert, daß während des Durchlaufes durch eine einzige Ultraschallzeile lediglich ein einziger Sendeimpuls abgestrahlt wird.

Die Figur 3 modifiziert das Schaltbild der Figur 2 dahingehend, daß auf der Sendeseite S für Sendefokussierung speziell in drei Tiefenbereichen insgesamt drei Sendeschieberegister 18, 19 und 20 vorgesehen und jedem Sendeschieberegister 18, 19, 20 entsprechend drei Sätz Sendeschalter 21, 22 bzw. 23 zugeordnet sind. Die sendemäßige Ansteuerung des Ultraschall-Arrays über die Schienenmatrix 5 erfolgt über ein den Sendeschaltern 21, 22 und 23 vorgeschaltetes Verzögerungsnetzwerk 24 für die vom Sende-Impulsgenerator 16 gelieferten Hochfrequenzimpulse. Das Verzögerungsnetzwerk 24 besteht im Falle der Figur 3 aus einer Verzögerungsleitung 25 mit Ausgängen für unterschiedliche Verzögerungszeiten $\tau_0$, $\tau_1$, $\tau_2$, etc. Die zeitverzögerten Sendesignale werden schließlich über Sende-Endstufen 26, 27, 28 (gegenbenenfalls für weitere Sendefokussierung auch noch über 29, etc.) den Sendeschaltern 21, 22 bzw. 23 zugeleitet. Die Anwahl unterschiedlicher Verzögerungszeiten $\tau_1$, $\tau_2$ usw. ist mittels Schalter 30, 31, etc. möglich. Die Schalter 32, 33 sind wieder die Empfangsschalter.

Mit dem Prinzipschaltbild der Figur 3 läßt sich fortlaufend mit Spalten- und Zeilennummer Sendefokussierung mit z.B. konstanter Apertur von fünf Spalten des Arrays nach folgendem Verzögerungsschema erreichen:

Spalten-Nr. sp     1 2 3 4 5 6 7 8 9 ...

Zeilen-Nr. Z       1 2 3 4 5 6 7 8 9 ...

Verzögerung
für Zeile    Z1 $\tau_0$ $\tau_1$ $\tau_2$ $\tau_1$ $\tau_0$
           Z2    $\tau_0$ $\tau_1$ $\tau_2$ $\tau_1$ $\tau_0$
           Z3     $\tau_0$ $\tau_1$ $\tau_2$ $\tau_1$ $\tau_0$
           Z4
           Z5
           Z6

Andere passende Prinzipsteuerungen, insbesondere auch solche mit veränderbarer Apertur, sind bei Bedarf nach Wahl selbstverständlich ebenfalls einsetzbar.

Die im Prinzipschaltbild der Figur 3 gezeigten Sende- und Empfangsschalter können die üblichen steuerbaren Transistorschalter sein. Gerade im Sendefall, wo in Anpassung an die unterschiedlichen Fokustiefen z.B. mit unterschiedlicher Intensität der Sendesignale gearbeitet wird, empfiehlt sich eine Ausbildung der Sendeschalter entsprechend Figur 4. Nach Figur 4 wird bei niedriger Signalintensität lediglich das mittlere Wandlerelement der gerade angesteuerten Spalte SPi auf Senden geschaltet. Bei Umschaltung auf höhere Intensität werden in Abhängigkeit von der Polarität der Sendesignale die Dioden 35 oder 36 lietend, so daß dem Mittleren Wandlerelement Randelemente der Spalte SPi hinzugeschaltet werden. Der beschriebene Schalter nach Figur 4 gewährleistet also eine autmatische Anpassung der aktiven Sendefläche an den Gewählten Intensitätswert bei geringem Schaltenergieaufwand, wobei das Schalten knacksarm erfolgt.

## Patentansprüche

1. Gerät zur Ultraschall-Abtastung mit einem Ultraschall-Abtastkopf (1), mit einer Aufzeichnungsvorrichtung für ein Echo-Sichtbild und mit einer Einrichtung zur stufenweisen dynamischen elektrischen Fokussierung des vom Abtastkopf (1) im Sendefall abgestrahlten Ultraschallfeldes in Tiefenrichtung, wobei die volle Abtasttiefe (T0—T3) in eine vorgegebene Zahl von Tiefenbereichen (T0—T1, T1—T2, T2—T3) unterteilt ist, wobei jedem Tiefenbereich ein eigener Sende-/Empfangs-Zyklus (t0—t1, t1—t3, t3—t5) zugeordnet ist und wobei die betreffenden Tiefenbereiche (T0—T1, T1—T2, T2—T3) jeweils getrennt fokussiert werden, dadurch gekennzeichnet, daß für jeden auszulotenden Tiefenbereich (z.B. T1—T2) ein Sendeimpuls (z.B. S2) zu einem solchen Zeitpunkt (z.B. $t_1$) abgegeben wird, der unmittelbar oder höchstens um eine vorgebbare Abwartezeit, die klein ist gegen die doppelte Durchlaufzeit der vollen Abtasttiefe (T0—T3), verzögert auf jenes Zeitintervall (z.B. $t_0$—$t_1$) folgt, in dem aus dem zeitlich davor abgetasteten Tiefenbereich (z.B. T0—T1) vollständige Echoinformation (z.B. E1) empfangen ist.

2. Gerät nach Anspruch 1, dadurch gekennzeichnet, daß der Sende-/Empfangs-Zyklus sukzessive für ein und dieselbe Abtastzeile (Z1, ... Zi, ... ZN) steuerbar ist.

3. Gerät nach Anspruch 1, dadurch gekennzeichnet, daß bei einer Ultraschall-Wandlerreihe (2) der Sende-/Empfangs-Zyklus im Zeilensprungverfahren für unterschiedliche Abtastzeilen (Z1, Z2, ... ZN) steuerbar ist.

4. Gerät nach Anspruch 1, 2 oder 3, dadurch gekennzeichnet, daß der Sende-/Empfangs-Zyklus gleichzeitig für mehrere Abtastzeilen (Z1, ... Zi, ... ZN), die in ausreichendem räumlichen Abstand voneinander liegen, sukzessive steuerbar ist.

5. Gerät nach einem der Ansprüche 1 bis 4, dadurch gekennzeichnet, daß mit der Sendefokussierung eine Empfangsfokussierung gekoppelt ist.

6. Gerät nach einem der Ansprüche 1 bis 4, dadurch gekennzeichnet, daß mit zunehmender Tiefe (T) der Fokussierung die Intensität der Ultraschall-Sendeimpulse (S1, S2 etc.) zu höheren Werten vergrößert ist.

7. Gerät nach Anspruch 6, dadurch gekennzeichnet, daß zur Umschaltung der Intensität als Sendeschalter eine Diodenschaltung (35, 36) dient, die die aktive Sendefläche des Ultraschall-Abtastkopfes (1) automatisch an den gewählten Intensitätswert anpaßt.

8. Gerät nach einem der Ansprüche 1 bis 7, dadurch gekennzeichnet, daß die dynamische Fokussierung über Sendeverzögung ($\tau$) erfolgt.

9. Gerät nach einem der Ansprüche 1 bis 7, dadurch gekennzeichnet, daß die dynamische Fokussierung durch Vergrößerung de Größe der Sendefläche mit zunehmender Tiefe (T) erfolgt.

## Revendications

1. Appareil d'exploration ultrasonique comportant une tête d'exploration ultrasonique (1), un dispositif d'enregistrement pour une image d'échos et un dispositif pour réaliser la focalisation dynamique électrique par échelons du champ ultrasonique, rayonné par la tête ultrasonique (1) à l'émission, suivant la direction de la profondeur et dans lequel la profondeur totale d'exploration (T0—T3) est subdivisée en un nombre prédéterminé de gammes de profondeurs (T0—T1, T2—T3), un cycle particulier émission/réception (t0—t1, t1—t3, t3—t5) étant associé à chaque gamme de profondeur et les gammes considérées de profondeurs (T0—T1, T1,

T2, T3) étant respectivement focalisées séparément, caractérisé par le fait que pour chaque gamme de profondeurs (par exemple T1—T2) devant être sondée, une impulsion d'émission (par exemple S2) est délivrée à l'instant (par exemple $t_1$), qui apparaît directement ou en étant retardé tout au plus d'un temps d'attente pouvant être prédéterminé, qui est faible par rapport au double du temps de transit sur la profondeur totale d'exploration (T0—T3), pendant l'intervalle de temps (par exemple $t_0$—$t_1$), durant lequel une information d'écho complète (par exemple E1) est reçue à partir de la gamme de profondeurs (par exemple (T0—T1) explorée précédemment.

2. Appareil suivant la revendication 1, caractérisé par le fait que le cycle émission/réception peut être commandé de manière successive pour une même ligne d'exploration (Z1, ... Zi, ... ZN).

3. Appareil selon la revendication 1, caractérisé par le fait que dans le cas d'une série de transducteurs ultrasoniques (2), le cycle émission/réception peut être commandé selon le procédé à saut de lignes pour différentes lignes d'exploration (Z1, Z2, ... ZN).

4. Appareil suivant la revendication 1, 2 ou 3, caractérisé par le fait que le cycle émission/réception peut successivement être commandé simultanément pour plusieurs lignes d'exploration (Z1, ... Zi, ... ZN) qui sont situées à une distance suffisante.

5. Appareil suivant l'une des revendications 1 à 4, caractérisé par le fait que la focalisation à la réception est accouplée à la focalisation à l'émission.

6. Appareil suivant l'une des revendications 1 à 4, caractérisé par le fait que lorsque la profondeur (T) de la focalisation augmente, l'intensité des impulsions ultrasonores émises (S1, S2, etc.) est accrue vers des valeurs supérieures.

7. Appareil suivant la revendication 6, caractérisé par le fait que pour réaliser la commutation de l'intensité on utilise comme commutation d'émission un circuit à diodes (35, 36) qui adapte automatiquement la surface d'émission active de la tête d'exploration ultrasonique (1) à la valeur choisie d'intensité.

8. Appareil suivant l'une des revendications 1 à 7, caractérisé par le fait que la focalisation dynamique est réalisée moyennant un retard (τ) à l'émission.

9. Appareil suivant l'une des revendications 1 à 7, caractérisé par le fait que la focalisation dynamique est réalisée par accroîssement de la taille de la surface d'émission lorsque la profondeur (T) augmente.

**Claims**

1. Ultrasonic scanning equipment with an ultrasonic scanning head (1), with a recording device for a visual echo image, and with a device for stepped dynamic electric focussing in the depth direction, of the ultrasonic field irradiated from the scanning head (1) during transmission, where the full scanning depth (T0—T3) is subdivided into a predetermined number of depth zones (T0—T1, T1—T2, T2—T3), where each depth zone is assigned its own transmitting/receiving cycle (t0—t1, t1—t3, t3—t5), and where the depth zones (T0—T1, T1—T2, T2—T3) in question are each separately focussed, characterised in that for each depth zone (e.g. T1—T2) which is to be sounded a transmitted pulse (e.g. S2) is emitted at a time (e.g. $t_1$) which, either directly or with a maximum delay of a predeterminable waiting time which is small in relation to double the transit time of the full scanning depth (T0—T3), follows that time interval (e.g. $t_0$—$t_1$) in which a complete item of echo information (e.g. E1) is received from the previously scanned depth zone (e.g. T0—T1).

2. Equipment as claimed in Claim 1, characterised in that the transmitting/receiving cycle can be controlled successively for one and the same scanning row (Z1, ... Zi ... ZN).

3. Equipment as claimed in Claim 1, characterised in that where a series of ultrasonic transformers (2) is provided the transmitting/receiving cycle can be controlled in a line jump process for different scanning rows (Z1, Z2, ... ZN).

4. Equipment as claimed in Claim 1, 2 or 3, characterised in that the successively controlled transmitting/receiving cycle for a plurality of scanning rows (Z1, ... Zi, ... ZN) which are sufficiently spaced from one another can be effected simultaneously.

5. Equipment as claimed in one of Claims 1 to 4, characterised in that the transmitting focussing unit is coupled to a receiving focussing unit.

6. Equipment as claimed in one of Claims 1 to 4, characterised in that with increasing focussing depth (T), the intensity of the ultrasonic transmitted pulses (S1, S2 etc) is increased in the direction of higher values.

7. Equipment as claimed in Claim 6, characterised in that a diode circuit (35, 36) serves as transmitting switch so that the intensity may be switched over and automatically matches the active transmitting surface of the ultrasonic scanning head (1) to the selected intensity value.

8. Equipment as claimed in one of Claims 1 to 7, characterised in that the dynamic focussing takes place via a transmission delay (τ).

9. Equipment as claimed in one of Claims 1 to 7, characterised in that the dynamic focussing is effected by increasing the size of the transmitting surface with increasing depth (T).

FIG 1

FIG 2

FIG 3

FIG 4